# EUROPEAN PATENT APPLICATION

(11) **EP 1 785 438 A1**
(43) Date of publication of application: **16.05.2007**
(21) Application number: 05765462.6
(22) Date of filing: 05.07.2005
(51) Int. Cl.: C08G 8/00

(54) **PROCESS FOR PRODUCING PHENOLIC NOVOLAK RESIN**

(30) Priority: 19.08.2004 JP 2004239060
(71) Applicant: Asahi Organic Chemicals Industry Co., Ltd., Nobeoka-shi, Miyazaki 882-8688 (JP)
(72) Inventor: INADUMI, Tomonori, ASAHI ORGANIC CHEM. IND. CO LTD, Niwa-gun, Aichi 480-0105 (JP); KAI, Hiroto, ASAHI ORGANIC CHEMICALS IND. CO. LTD., Niwa-gun, Aichi 480-0105 (JP)
(74) Representative: Paget, Hugh Charles Edward
(86) International application number: PCT/JP2005/012384
(87) International publication number: WO 2006/018937

(57) **Abstract**

A process for advantageously producing, in a short period of time, a phenolic novolak resin, in which substantially no unreacted aldehyde remains, by using a continuous reactor, while a generation of higher order condensation products is prevented. In continuously producing the phenolic novolak resin by reacting at least one of phenols with at least one of aldehydes in the presence of an acidic catalyst by using the continuous reactor (10) which has a long reaction tube (12): there are provided a heating zone (26) and a temperature control zone (32) in a longitudinal direction of the reaction tube (12); a mixture of raw materials is heated, at the heating zone (26), to a temperature not less than a temperature, at which a reaction heat is generated; and the mixture, whose temperature is increased by the heating operation and the reaction heat of the addition condensation reaction, is subjected to a cooling operation at the temperature control zone (32) which is located on a downstream side of the reaction tube in the direction of the flow of the mixture, while the pressure within the reaction tube (12) is kept to be not lower than a vapor pressure of water.

## Description

### TECHNICAL FIELD

The present invention relates in general to a process for producing a phenolic novolak resin. More particularly, the present invention relates to a technique for advantageously producing the phenolic novolak resin by using a continuous reactor.

### BACKGROUND ART

As it is well known, the phenolic novolak resin is produced by heating and reacting at least one of phenols and at least one of aldehydes in the presence of an acidic catalyst. In detail, the phenolic novolak resin is produced by repeating an addition reaction, in which an intermediate is formed by an addition of the at least one of aldehydes to the at least one of phenols, and a condensation reaction, in which the at least one of phenols is condenced with the intermediate. The molecular weight of the phenolic novolak resin is adjusted based on a blending ratio of the at least one of phenols and the at least one of aldehydes. For this reason, if the phenolic novolak resin is made from a phenol and a formaldehyde, for instance, the blending ratio is generally determined, so that the molar ratio of the at least one of aldehydes (F) to the at least one of phenols (P) is not more than one, i.e., (F/P) ≦ 1.

In producing the phenolic novolak resin, there are employed a production technique for a batch process or a continuous process. However, in the latter production process for the continuous process, in which the reaction of the at least one of phenols with the at least one of aldehydes are progressed in a long reaction tube, while raw materials are continuously flowed into the reaction tube, there is easily generated an insoluble and non-melting higher order condensation product (scale) on an internal surface of the reaction tube. Accordingly, there is a tendency of deteriorating a heat transfer performance of the reaction tube which makes a temperature control difficult and deteriorating a quality of a product. For this reason, there are mainly adopted the former technique for the batch process and a method, in which the technique for the batch process is automated.

Also, in the former technique for the batch process, the raw materials accommodated in a reactor is simultaneously reacted at one time. Accordingly, there is a defect that a production volume of the resin is limited according to a capacity of the reactor, and there is a problem that it is difficult to reduce the production time. Therefore, the technique for the batch process is basically poor in its productivity. In addition, in the technique for the batch process, there is needed to respectively accommodate the raw materials in the reactor, heating the reactor, and removing the product from the reactor for each batch, whereby the technique for the batch process is troublesome, compared with those of the technique for the continuous process.

In producing the phenolic novolak resin, generally the blending quantity of the at least one of aldehydes is determined to be a small amount, so that the above-described molar ratio (F/P) of the at least one of aldehydes (F) and the at least one of phenols (F) is not higher than one. In case of the batch process, even if the amount of the at least one of aldehydes is made much smaller than that of the at least one of phenols, a few % of the at least one of aldehydes is unreacted and remained in a reaction product in liquid phase after the reaction is completed, which causes a problem of requiring an expenditure for removing the unreacted aldehyde (residual monomer). Also, if the reaction product in liquid phase is distilled under reduced pressure after the reaction is completed so as to remove the unreacted compounds and moisture from the reaction product, there is a tendency that the unreacted aldehyde is gradually reacted during the distillation, so that a molecular weight of the phenol resin just after the reaction is not the same as that of the phenol resin after an aftertreatment.

In Patent Document 1, there is proposed a process for producing a phenol formaldehyde resin by using a continuous reactor. In Patent Document 1, a reaction tube is divided into several sections of reaction zones and respectively heating the reaction zones, so that the temperature of the reaction tube gradually increases. However, as a result of a study of the inventors of the present invention, there was revealed that if the phenol formaldehyde resin is produced by adopting the above process, there was generated higher order condensation products on the internal surface of the reaction tube. Therefore, there was needed to further improve such method.

Patent Document 1: JP-A-51-130498

### DISCLOSURE OF THE INVENTION

### PROBLEM TO BE SOLVED BY THE INVENTION

The present invention was developed in view of the above situations. It is therefore an object of the invention to provide a process for advantageously producing, in a short period of time, a phenolic novolak resin, in which substantially no unreacted aldehyde is remained, while there is prevented a generation of higher order condensation products, by using a continuous reactor.

### MEANS FOR SOLVING THE PROBLEM

As a result of an extensive study of the inventors of the present invention, there was found that a total amount of the at least one of aldehydes, which is used as one of raw materials, can be substantially reacted, by devising a heating operation and a temperature control operation of a mixture of the raw materials including the at least one of phenols, the at least one of aldehydes, and the acidic catalyst, as well as setting a pressure within the continuous reactor to a pressure not less than a predetermined pressure. In addition, there can be advantageously produced a phenolic novolak resin of an excellent quality, with which no higher order condensation product is mixed.

The present invention was made based on the above findings, and a first form of the present invention provides a process for continuously producing a phenolic novolak resin by reacting at least one of phenols with at least one of aldehydes in the presence of an acidic catalyst, by using a continuous reactor which has a long reaction tube,
characterized by comprising the steps of
providing the reaction tube of the continuous reactor with a heating zone and a temperature control zone in a longitudinal direction of the reaction tube;
continuously supplying a mixture, which includes the at least one of phenols, the at least one of aldehydes, and the acidic catalyst, into the reaction tube of the continuous reactor, while a pressure in the reaction tube is kept to be not lower than a vapor pressure of water;
heating the mixture at the heating zone, which is located on an upstream side of the reaction tube in a direction of a flow of the mixture, to a temperature which is not less than a temperature, at which a reaction heat is generated, for thereby initiating an addition condensation reaction between the at least one of phenols and the at least one of aldehydes in the mixture; and
introducing the mixture, whose temperature is increased by the heating operation and the reaction heat of the addition condensation reaction, to the temperature control zone, which is located on a downstream side of the reaction tube in the direction of the flow of the mixture, and progressing the addition condensation reaction while only the cooling operation of the mixture is conducted.

Also, in a second form of the process for producing the phenolic novolak resin according to the present invention,
a pipe diameter of at least a portion of the reaction tube, which is located on a downstream side of the temperature control zone with respect to the direction of the flow of the mixture, is made smaller than a pipe diameter of a portion of the reaction tube which is located on the heating zone, so as to enhance a flow rate of the mixture located within the portion of the reaction tube of which the pipe diameter is made smaller.

Moreover, in a third form of the present invention, a static mixer is positioned inside the reaction tube, so that the mixture being flowed in the reaction tube is stirred in the reaction tube.

In addition, in a fourth form of the present invention, the flow rate of the mixture flowing inside the reaction tube is not less than 0.3m/second.

Also, in a fifth form of the process for producing the phenolic novolak resin according to the present invention, a length of the heating zone is shorter than a length of the temperature control zone.

### ADVANTAGEOUS EFFECT OF THE INVENTION

According to the above-mentioned first form of the process for producing the phenolic novolak resin according to the present invention, the heating zone is provided on the upstream side of a longitudinal reaction tube, in the direction of the flow of the mixture (liquid) of the raw materials, and the mixture is promptly heated to a temperature, which is not less than the temperature, at which the reaction heat is generated. In this case, in the present invention, it is desirable to adopt, as a minimum heating temperature, a temperature (about 80°C ~ about 100°C), with which an addition condensation reaction is substantially initiated and a sufficient reaction heat is generated. Meanwhile, it is desirable to adopt, as a maximum temperature, a temperature (about 160°C ~ about 180°C), which enables the temperature control, although these temperatures are influenced by an amount and a kind of the catalyst. The temperature of thus heated mixture is controlled only by the cooling operation at a temperature control zone, which is provided on the downstream side of the reaction tube with respect to the direction of the flow of the mixture, so as not to exceed 180°C and not to be lower than 90°C. For this reason, according to the present invention, the phenolic novolak resin which has a desired molecular weight can be highly advantageously produced. In addition, according to the present invention, a speed of the production of the intended resin is enhanced, whereby a distribution of molecular weight of thus produced resin is preferable, and a generation of the higher order condensation products to be the scale is effectively restrained, compared with a conventional method, in which the temperature is gradually increased. In the present invention, the "temperature, at which the reaction heat is generated" means a temperature, at which a rate of increase of the mixture temperature at the heating zone is enhanced.

In addition, in the process for producing the phenolic novolak resin according to the present invention, the pressure in the reaction tube is kept to be not lower than the vapor pressure of water. Accordingly, there is advantageously restricted a vaporization of water which is used as a solvent and which is generated as a result of the condensation reaction. Accordingly, the at least one of aldehydes is efficiently provided for the reaction, and there can be effectively prevented the unreacted at least one of aldehydes from remaining in the mixture, after the reaction is completed. Owing to this arrangement, there is not needed to previously introduce a somewhat larger quantity of the at least one of aldehydes, anticipating a quantity of the at least one of aldehydes to be unreacted. In addition, there is not needed an operation of removing the unreacted at least one of aldehydes after the reaction, so that a production cost can be advantageously reduced.

Also, in the second form of the process for producing the phenolic novolak resin according to the present invention, the pipe diameter of at least the portion of the reaction tube, which is located on the downstream side of the temperature control zone with respect to the direction of the flow of the mixture, is made smaller than the pipe diameter of the portion of the reaction tube which is located on the heating zone, so as to enhance the flow rate of the mixture located within the portion of the reaction tube of which the pipe diameter is made smaller. Accordingly, even if a viscosity of the mixture flowing at the downstream in the direction of the flow of the mixture is increased, there is highly effectively prevented the generation of the scale inside the reaction tube.

Moreover, according to the third form of the present invention, the static mixer is positioned inside the reaction tube, so that the mixture being flowed in the reaction tube is stirred in the reaction tube. Accordingly, the reaction of the at least one of phenols with the at least one of aldehydes is effectively progressed, and the generation of the higher order condensation products can be effectively restrained.

In addition, if the flow rate of the mixture is not less than 0.3m/second according to the above fourth form of the process for producing the phenolic novolak resin of the present invention, there can be more effectively prevented the generation of the higher order condensation products.

Also, in the fifth form of the process for producing the phenolic novolak resin according to the present invention, the length of the heating zone is shorter than the length of the temperature control zone, so that the mixture of the raw materials is promptly heated to the temperature, which is not less than a temperature, at which the reaction heat is generated. Accordingly, there can be ensured a sufficient length of the temperature control zone, which progresses the reaction of the at least one of phenols with the at least one of aldehydes. Therefore, the intended phenolic novolak resin can be more advantageously produced.

### BRIEF DESCRIPTION OF THE DRAWING

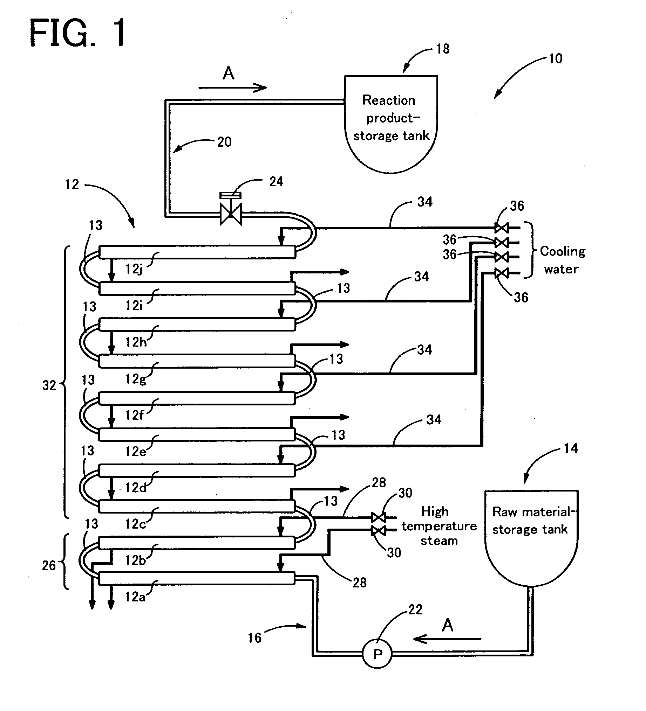

[Fig.1] This is a schematic diagram showing one example of the continuous reactor used in the present invention.

### DESCRIPTION OF REFERENCE NUMERALS

- 10:: Continuous reactor
- 12:: Reaction tube
- 12a~12j:: Pipe
- 14:: Raw material-storage tank
- 18:: Reaction product-storage tank
- 22:: Pump
- 24:: Pressure-regulating valve
- 26:: Heating zone
- 32:: Temperature control zone

### BEST MODE FOR CARRYING OUT THE INVENTION

The phenolic novolak resin is produced by the reaction of the at least one of phenols, the at least one of aldehydes, and the acidic catalyst, which are used as essential components, as described above. As examples of the phenols, which are among the raw materials, there can be used: phenol; orthocresol; methacresol; paracresol; resorcinol; xylenol; bisphenols; ortho-substituted phenols having a hydrocarbon radical, which has at least three carbons, preferably 3~10 carbons, at its ortho position; para - substituted phenols having a hydrocarbon radical, which has at least three carbons, preferably 3~18 carbons at its para position; and other substituted phenols. Any one of, or any combination of these phenols are used.

Among the above-mentioned phenols, there can be used, as the bisphenols, bisphenol A, bisphenol F, bis(2-methylphenol) A, bis(2-methylphenol) F, bisphenol S, bisphenol E, bisphenol Z, or the like. As the ortho-substituted phenols, there can be used 2-propylphenol, 2-isopropylphenol, 2-sec-butylphenol, 2-tert-butylphenol, 2-phenylphenol, 2-cyclohexylphenol, 2-nonyl phenol, 2-naphthylphenol, or the like. In addition, there can be used, as the para-substituted phenols, 4-propylphenol, 4-isopropylphenol, 4-sec-butylphenol, 4-tert-butylphenol, 4-phenylphenol, 4-cyclohexylphenol, 4-nonylphenol, 4-naphthylphenol, 4-dodecylphenol, 4-octadecylphenol, or the like.

Meanwhile, there can be exemplified conventionally known various aldehydes, such as formaldehyde, formalin, paraformaldehyde, trioxan, acetic aldehyde, paraaldehyde, propionaldehyde, or the like. Any one of, or any combination of these aldehydes are used. These aldehydes are solved in water and used in a form of an aqueous solution, as needed.

Generally, the phonols (P) and the aldehydes (F), as described above, are respectively used in an amount of 0.1~1.0 mol, preferably in an amount of 0.3~0.9 mol per 1 mol of the at least one of phenols.

The catalyst to be employed for the addition condensation reaction of the phenols and aldehydes is not particularly limited, as long as the catalyst is an acidic catalyst. There is suitably selected from among known various acidic catalysts, which are conventionally used for a manufacture of the phenolic novolak resin. Examples of the acidic catalyst for the production of the phenolic novolak resin can include: acids such as hydrochloric acid, sulfuric acid, p-toluenesulfonic acid, maleic acid, phosphoric acid, and oxalic acid; and divalent metal salts such as zinc chloride, zinc acetate, and manganese acetate. Any one of, or any combination of these catalysts are used.

An amount of use of the catalyst is not particularly limited, and is preferably determined based on a composition of the raw materials, etc. Generally, there is adopted a ratio of 0.5~ 50 parts by mass of the catalyst per 1000 parts by mass of the at least one of phenols.

Accordingly, there is produced the phenolic novolak resin by using the at least one of phenols, the aldehydes, and the acidic catalyst, as described above. In the production of such phenolic novolak resin of the present invention, there is not used a conventionally used batch process reactor, but there is used a continuous reactor which excels in productivity.

In particular, in Fig. 1, there is shown an outline of a schematic diagram which shows one embodiment of a continuous reactor to be adopted in the present invention. A continuous reactor 10 is formed including a reaction tube 12, which has a shape of a long pipe, in which the at least one of phenols and the at least one of the aldehydes are substantially reacted with each other, similar to a conventional process. Described more specifically, the reaction tube 12 has ten straight-shaped metal pipes 12a ~ 12j, each of which has a conventionally known double pipe structure consisting of coaxially located internal and external tubes, and the metal pipes 12a ~ 12j are connected to each other in series, by being connected at the internal pipes by using metal connecting pipes 13 which roughly have U-shapes. As a whole, the reaction tube 12 has a structure, corresponding to a long cylindrical pipe which has a plurality of U-shaped bent portions, wherein each pair of adjacent bent portions are provided at predetermined intervals.

An internal diameter and a length of the reaction tube 12 (in detail, connected internal tubes) are not particularly limited, and can be suitably determined based on a kind, a flow rate, heating temperature, etc. of the mixture (liquid) of the raw materials flowing in the reaction tube 12. As the internal diameter, there is generally adopted a size in a range of about 10mm~ about 200mm. Meanwhile, as the total length of the reaction tube 12, there is adopted a length within a range of about 10m~ about 2000m, so that an excellent productivity can be suitably ensured.

Also, to one of ends of the reaction tube 12 (pipe 12a side), comprising the above-mentioned series of pipes 12a~12j, there is connected a supply passage 16, which is formed of a cylindrical pipe and is intended to introduce the mixture of the raw materials stored in a storage tank 14 for raw material to the reaction tube 12. Meanwhile, to the other end of the reaction tube 12 (pipe 12j side), there is connected a delivery passage 20, which is formed of a cylindrical pipe and intended to deliver the mixture, which has been reacted within the reaction tube 12, to a storage tank 18 for reaction product.

Moreover, on a supply passage 16, there is provided a pump 22, which has a known structure. Due to an operation of this pump 22, the mixture of the raw materials stored in the raw material-storage tank 14 is introduced to the inside the reaction tube 12 and flowed within the reaction tube 12, and then the mixture is stored in the reaction product-storage tank 18 via the delivery passage 20. According to this arrangement, the mixture can be continuously flowed within the continuous reactor 10 in a specific direction (in a direction A in Fig. 1).

In addition, there is provided a pressure-regulating valve 24 on the delivery passage 20, which is located at the downstream side of the reaction tube 12 relative to the flowing direction of a flow of the mixture. The pressure-regulating valve 24 is particularly configured, so that the pressure of an inside of the reaction tube 12 can be kept to a certain pressure, by operating the pressure-regulating valve 24.

In the present embodiment, two pipes 12a, 12b, which are located at the upstream side of the reaction tube 12 with respect to the direction of the flow of the mixture, are made as a heating zone 26, at which the heating operation is executed. The heating zone includes a couple of pipes 12a, 12b, and a high temperature steam is flowed in a space, which is located at an outermost part within each of the double-pipe-structured pipes 12a, 12b and which has an annular cross section (a space between the internal and external pipes). Described in detail, by operating each valve 30 positioned on steam supply passage 28 connected to a high-temperature steam generator (not shown), a predetermined amount of a high-temperature steam can be introduced into each of the pipes 12a, 12b. There is arranged that, if the high-temperature steam is flowed from one of the ends of the pipes 12a, 12b (right side in Fig. 1) to the other ends of the pipes 12a, 12b (left side in Fig. 1) and is discharged, a heat of the high-temperature steam is transmitted to the mixture flowing in the innermost part within the pipes 12a, 12b, whereby the mixture of the raw materials are heated in the heating zone 26 at one stroke.

Meanwhile, a portion which is formed by eight pipes 12c~12j located downstream of the reaction tube 12 with respect to the direction of the flow of the mixture is made as a temperature control zone 32. In the space which has the annular cross section (in the annular space between the internal and external tubes) of the eight pipes 12c~12j which form the control zone 32, a cooling water is flowed as needed, unlike the above-described heating zone 26.

Described in detail, by controlling each of valves 36 located on each of cooling water ducts 34, which are communicated with a cooling water tank, not shown, a predetermined flow rate of the cooling water is introduced to each of the annular spaces of the pipes 12c~12j. Due to this cooling water, a generation of an excessive heat of the mixture flowing within the internal pipes of the pipes 12c~12j, which have double pipe structures. Accordingly, temperature of the mixture can be advantageously controlled to a desired temperature. Namely, the temperature control at the temperature control zone 32 can be executed only by a necessary cooling operation, without executing any heating operation. According to this arrangement, the temperature of the mixture can be extremely easily controlled, without causing the runaway reaction. Therefore, there can be stably produced the phenolic novolak resin of an excellent quality, in which higher order condensation products are not mixed. In Fig. 1, two adjacent pipes of the temperature control zone 32, in particular, 12c and 12d, 12e and 12f, 12g and 12h, and 12i and 12j from the upstream end of the temperature control zone 32, respectively constitute one pair of pipes. The cooling water is arranged to be flowed from the downstream side to the upstream side of the respective pairs of the pipes, and then flowed out of the pipes.

In order to continuously produce an intended phenolic novolak resin by using the continuous reactor of the present embodiment, which has a structure as described above, there may be adopted procedures such as the followings.

That is, first of all, the raw materials such as the at least one of phenols, the at least one of aldehydes, the acidic catalyst, etc., as described above, and a solvent such as water and other additives, as needed, are introduced in a raw material-storage tank 14, in which the raw materials are temporarily stored, continuously or at intervals of a predetermined time. The raw materials etc. introduced in the for raw material-storage tank 14 are stirred in a stirrer (not shown) within the raw material-storage tank 14, and made into a uniform mixture. At this time, the temperature of the mixture in the raw material-storage tank 14 is a room temperature ~ about 60°C.

By an operation of the pump 22, the mixture stored in the raw material-storage tank 14 is continuously delivered to the reaction tube 12 via the supply passage 16. In this case, it is desirable that the flow rate of the mixture flowing within the reaction tube 12 is not less than 0.3m/second, preferably not less than 0.5m/second. By adopting such flow rate, there can be advantageously prevented the generation of the higher order condensation products, which are to be the scale. The upper limit of the flow rate of the mixture is not particularly limited, however, it is practically not higher than 10m/second.

The mixture introduced to the reaction tube 12 is heated to a temperature, which is not less than a temperature, at which the reaction heat is generated, at the heating zone 26 located upstream at the reaction tube 12 in the direction of the flow of the mixture, by a high temperature steam. Due to this heating operation, the reaction of the at least one of phenols with the at least one of aldehydes is substantially initiated. If the temperature of the mixture does not achieve the temperature at which the reaction heat is generated, at the heating zone 26, a heating value of the reaction heat generated by the reaction of the at least one of phenols and the at least one of aldehydes is insufficient. Accordingly, a progress of the reaction at the temperature control zone 32 slows down and the reaction is not completed before the mixture reaches the reaction product-storage tank 18, whereby unreacted monomers are remained. Meanwhile, although the maximum heating temperature is not particularly limited, if the temperature of the mixture is too high, a heat is remarkably generated and the reaction becomes out of control. In this case, even if the mixture is cooled, the temperature of the mixture can no longer be controlled, so that there is caused a problem in respect of a safety and there are easily generated the higher order condensation products.

Described in detail, it is desirable that the heating temperature is determined depending on an amount of use and/or a kind of the catalyst. It is desirable that the heating temperature is 80°C~180°C, preferably 100°C~160°C, and more preferably 120°C~150°C. For instance, in a case the catalyst is used in the ratio of about 5 parts by mass per 1000 parts by mass of the at least one of phenols, if the temperature at the outlet of the heating zone 26 exceeds 170°C, there is a tendency of causing a runaway reaction and the temperature control cannot be conducted at the temperature control zone 32. In this case, if the temperature at the outlet of the heating zone 26 is lower than 90°C, there is a tendency not to generate the reaction heat. Meanwhile, if the catalyst is used at the ratio of about 10 parts by mass per 1000 parts by mass of the at least one of phenols, the reaction heat is generated even if the temperature at the outlet of the heating zone 26 is about 90°C, so that the phenol resin can be produced without any problem, even at the temperature as mentioned above. Also, if the catalyst is used in a ratio of about 2 pars by mass per 1000 parts by mass of the at least one of phenols, there is not caused the runway reaction even if the temperature at the outlet of the heating zone 26 is 180°C, so that the phenol resin can be produced without any problem.

The heating time in the heating zone 26 is not particularly limited, but is suitably adjusted depending on an internal diameter and a length of the reaction tube 12 and a flow rate of the mixture, etc. However, if a productivity is taken into consideration, it is desirable to execute the heating operation in a minimum period of time.

Afterwards, the mixture, which is heated within the heating zone 26 to a predetermined temperature, is introduced to the inside of the temperature control zone 32, which is located at a downstream of the reaction tube 12 in the flowing direction, (in this embodiment, from the heating zone 26, immediately) after the temperature of the mixture has been achieved at a predetermined control temperature. In the temperature control zone 32, the addition condensation reaction between the at least one of phenols and the at least one of aldehydes are progressed, while only the cooling operation of the mixture is conducted. In this case, it is desirable that the liquid temperature of the mixture in the temperature control zone 32 is kept within 90°C~ 180°C, preferably 130°C~160°C.

In the temperature control zone 32 of this embodiment, there is arranged that each pair of the pipes are respectively cooled by the cooling water, and the mixture introduced from the heating zone 26 is suitably cooled.

Also, in the present embodiment, a length of the heating zone 26 is sufficiently shorter than that of the temperature control zone 32. In detail, the length of the heating zone 26 is about one fourth of the length of the temperature control zone 32, for instance, which means that the length of the temperature control zone 32 is sufficiently assured, so that the reaction of the at least one of phenols with the at least one of aldehydes can be advantageously progressed. If the length of the heating zone 26 with respect to the total length of the reaction tube 12 is too long, compared with the length of the temperature control zone 32, there may be easily generated the scale on the internal surface of the reaction tube 12, or the reaction may not be sufficiently progressed and the unreacted aldehyde may be remained, similar to a conventional method.

Further, in this embodiment, the pressure within the reaction tube 12 is kept to be not lower than a vapor pressure of water. That is, the pressure within the reaction tube 12 is suitably determined by the pressure-regulating valve 24, so that a portion of the reaction tube 12 which has a temperature not less than the temperature at which the reaction heat is generated, the pressure is not less than 1 atm (0.10 MPa). For instance, if the temperature is 130°C, the pressure is not less than 0.27 MPa, and if the temperature is 160°C, the pressure is not less than 0.62 MPa. According to this arrangement, vaporization of water included in the mixture can be effectively prevented. As a result, the at least one of aldehydes, which are provided at the state of being solved in water, are effectively reacted with the at least one of phenols, so that there can be effectively prevented the unreacted aldehydes from being remained. Although an upper limit of the pressure within the reaction tube 12 is not particularly limited, it is practically desirable that the pressure is not higher than 3.0MPa.

As an addition condensation reaction of the at least one of phenols with the at least one of aldehydes is progressed in the reaction tube 12, the intended phenol resin is generated, as the reaction progresses. If the phenol resin is produced in this way, while the mixture is flowed within the temperature control zone 32 and then the reaction within the reaction tube 12 is completed, the phenol resin is brought out to delivery passage 20, and is stored in the reaction product-storage tank 18 via the delivery passage 20.

Then, the reaction product stored in the reaction product-storage tank 18 is subjected to known aftertreatments, such as a treatment of a water washing and a distillation treatment, whereby the intended phenolic novolak resin is produced. In thus produced phenolic novolak resin, no higher order condensation product is mingled, and a desired distribution of molecular weight is advantageously realized, so that an excellent quality is assured.

Also, according to the above-mentioned method, no unreacted aldehyde is dissolved in reaction product, or a concentration of the unreacted aldehyde in the reaction product is almost zero, so that there is exhibited a characteristic that a total amount of the aldehydes, which are used as the raw materials, is substantially reacted. In addition, there can be advantageously prevented the scale formed of the higher order condensation products from adhering and accumulating on the internal surface of the reaction tube 12.

While the preferred embodiment of the present invention has been described in detail, for illustrative purpose only, it is to be understood that the present invention is not limited to the details of the illustrated embodiment.

For instance, in the above embodiment, the mixture flowing within the reaction tube is flowed at a fixed flow rate, by controlling a number of revolutions of the pump 22 which is intended to supply the mixture of the raw materials to a fixed number. It is also possible to enhance the flow rate of the mixture located at a portion of the reaction tube, by making a pipe diameter of the portion, at the downstream side of the reaction tube in the direction of the flow of the mixture, smaller than a pipe diameter of a portion, at the upstream side of the reaction tube in the direction of the flow of the mixture.

Described in detail, a viscosity of the mixture is increased as the reaction progresses, in other words, the viscosity of the mixture tends to increase as the mixture flows towards downstream in the direction of the flow of the mixture. In this case, if a pipe diameter (internal diameter) of at least a portion of the reaction tube, which is located on a downstream side of the temperature control zone 32 with respect to the direction of the flow of the mixture, is made smaller than a pipe diameter (internal diameter) of a portion of the reaction tube which is located on the heating zone 26, there can be enhanced a flow rate of the mixture located within the portion of the reaction tube, of which the pipe diameter is made smaller. Accordingly, there can be highly effectively prevented a generation of a scale on an internal surface of the reaction tube 12. In addition, a resin layer comprising the phenols, etc., and a water layer including the aldehyde are advantageously stirred and mixed with each other.

If the pipe diameter of at least a portion of the reaction tube is made smaller so as to partially enhance the flow rate as described above, there can be enjoyed advantages that a length of the reaction tube 12 can be arranged to be short so that there can be avoided making a large-sized reactor, compared with a case, in which a flow rate of all the mixture within overall the reaction tube 12 by, e.g., increasing a number of rotation (in this case, the flow rate of overall the reactor is increased, so that there is needed to make the reactor longer to ensure a sufficient reaction time). Also, the pipe diameter of the reaction tube 12 may be arranged, so as to be gradually narrowed as the pipe is closer to the downstream side with respect to the direction of the flow of the mixture (as the viscosity of the mixture increases).

There may also be arranged a static mixer, which has a known structure, at the reaction tube 12, so as to improve a performance for stirring the mixture flowing within the reaction tube 12. If the static mixer is used, the mixture is effectively stirred, so that there can be restricted the generation of the higher order condensation products and advantageously enhanced an efficiency of the reaction between the at least one of phenols and the at least one of aldehydes. If the static mixer is positioned as described above, the mixture flowing within the reaction tube 12 is advantageously stirred, so that the flow rate of the mixture flowing within the reaction tube 12 can be arranged lower than the mixture which is flowing within the reaction tube without the static mixer. In detail, if the static mixer is not used, it is desirable to set the flow rate of the mixture flowing within the reaction tube to not less than 0.3m/second as described above. Meanwhile, if the static mixture is used, it is desirable to set the flow rate of the static mixer to not less than 0.1m/second. In addition, if the flow rate is set to a low rate, the length of the reaction tube 12 can be arranged to be short, so that there can be avoided making a large-sized reactor. A type of or a position to arrange the static mixer is not particularly limited. There can be adopted an arrangement to position commercially available static mixers keeping a predetermined distance apart from each other, e.g., positioning a static mixer having a suitable number of elements at an inlet side of each of the pipes 12c ~ 12j which constitute the temperature control zone 32.

Also, in the above example, there is adopted, as the pipe which constitutes the reaction tube 12, a tube which has a structure of a duplex tube comprising an external tube and an internal tube which is coaxially located within the external tube. With this tube, the mixture was heated or cooled by flowing the high-temperature steam or the coolant through the space between the internal and external tubes. However, the method of heating or cooling is not limited to the above example. Instead, there can be adopted any conventionally known methods, such as a heating method by using a band heater. In addition, each of the pipes may be respectively heated or cooled, or a plurality of the pipes may be collectively heated or cooled.

In addition, in the above embodiment, the heating zone 26 is formed by two pipes 12a, 12b, while the temperature control zone 38 is formed by eight pipes 12c~12j. It is needless to mention that the number of pipes to be allocated in each zone is not limited to that of the above example.

It is to be understood that the present invention may be embodied with various other changes and modifications which may occur to those skilled in the art, without departing from the spirit and scope of the invention defined in the attached claims.

### EXAMPLES

To further clarify the present invention, there will be described some examples of the present invention. It is to be understood that the present invention is not limited to the details of the following examples.

At first, there was prepared a continuous reactor (10), which had a structure as shown in Fig. 1. As a tube diameter (internal diameters) of a reaction tube (12), there was adopted 25mm or 20mm, as shown in TABLE 1 below. Also, there were respectively allocated a thermometer and a manometer at an outlet of each pipe (12a~12j) which constitutes the reaction tube (12) and an inlet of a pipe (12a) located at the uppermost stream side of the tube, so that a temperature of a mixture flowing in the tube and a pressure of inside the tube could be measured. Meanwhile, as raw materials, there were respectively prepared at least one of phenols: a phenol, at least one of aldehydes: 47% aqueous solution of a formaldehyde, and an acidic catalyst: oxalic acid.

Also, a generation of a reaction temperature was confirmed by observing a change of a curve which represents an increase of a temperature of the mixture in each of the pipes (12a, 12b), by respectively measuring a temperature of the outlet of each of the pipes and a temperature of the inlet of the pipe (12a).

### <Examples 1~11 and Comparative Examples 1~2 (continuous process)>

The phenol, the 47% aqueous solution of the formaldehyde, and the oxalic acid were introduced in a raw material-storage tank (14), so as to fulfill the ratio shown in TABLE 1 below, and were sufficiently stirred so as to obtain an uniform mixture. Afterwards, a pump (22) was operated and the mixture within the raw material-storage tank (14) was supplied to the inside the reaction tube (12), so as to fulfill the flow rate as shown in TABLE 1 below. Then, the mixture was heated at the outlet of the heating zone (26) located at the upstream in the direction of the flow of the mixture, until the temperature of the mixture becomes as shown in TABLE 1 below. Thereafter, the mixture delivered from the heating zone (26) was reacted, while it was suitably cooled at a temperature control zone (32), and then the mixture was accommodated in a reaction product-storage tank (18). During this operation, the pressure within the reaction tube (12) was enhanced by using a pressure-regulating valve (24).

Also, during the production of the phenolic novolak resin as described above, the pressure within the reaction tube (12) and the temperature of the mixture were measured. Then, thus measured pressure and maximum and minimum values of the mixture temperature at the temperature control zone (32) are collectively shown in TABLE 1 below.

After the reaction had been completed, there was checked whether the higher order condensation products to be the scale had been generated by visually observing the inside of the reaction tube (12), and thus obtained results are shown in TABLE 1 below. Also, the reaction products stored in the reaction product-storage tank (18) was taken out, and an amount of a residual volume of the formaldehyde was measured in accordance with a method prescribed by ISO 9397. Thus obtained results are also shown in TABLE 1 below.

Also, there was measured a weight average molecular weight (Mw) of a resin phase of the reaction products stored in the reaction product-storage tank (18), and thus obtained results are shown in TABLE 1 below. In this EXAMPLE, the weight average molecular weight is a weight average molecular weight of polystyrene conversion obtained by a measurement by gel permeation chromatography. In particular, the molecular weight is a standard value of the polystyrene conversion, obtained by a measurement by using a gel filtration chromatograph SC - 8010 (column: G1000H_{XL} + G2000H_{XL}, detector: UV254nm, carrier: tetrahydrofuran 1ml/min, and temperature of the column: 38 °C) available from TOSOH CORPORATION (JAPAN).

### <Comparative Examples 3 (batch process)>

Phenol, 47% aqueous solution of formaldehyde, and oxalic acid were introduced into a reactor, which has an overspill, a thermometer, and a stirrer, so as to meet a ratio as shown in TABLE 1 below. Subsequently, a temperature within the reactor was gradually increased up to a reflux temperature (100°C). Further, these raw materials were reacted at the reflux temperature for three hours, whereby a phenolic novolak resin (reaction product) was obtained.

Similar to the above Examples for the continuous process, by visually observing the inside of the reactor, there was checked whether the higher order condensation products were generated, and there were measured the weight average molecular weight and the amount of the residual formaldehyde. Thus obtained results are collectively shown in TABLE 1 below.

### <Comparative Examples 4 (conventional method)>

For the sake of a comparison, there was also produced a phenolic novolak resin, by a method as disclosed in the above-mentioned Patent Document 1. Namely, the phenol, the 47% aqueous solution of formaldehyde, and the oxalic acid were respectively introduced in a raw material-storage tank, so as to fulfill the ratio as shown in TABLE 1 below, and were sufficiently stirred so as to obtain an uniform mixture. Afterwards, the pump was operated and the mixture within the raw material-storage tank was supplied to the inside the reaction tube, so as to flow at a flow rate similar to that of the Examples (0.3m/second) shown in TABLE 1 below. In this way, a phenolic novolak resin was produced. Similar to the above Examples for the continuous process, visually observing whether the higher order condensation products had been generated, and there were measured the weight average molecular weight and the amount of the residual formaldehyde. Thus obtained results are collectively shown in TABLE 1 below.

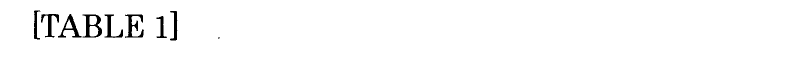

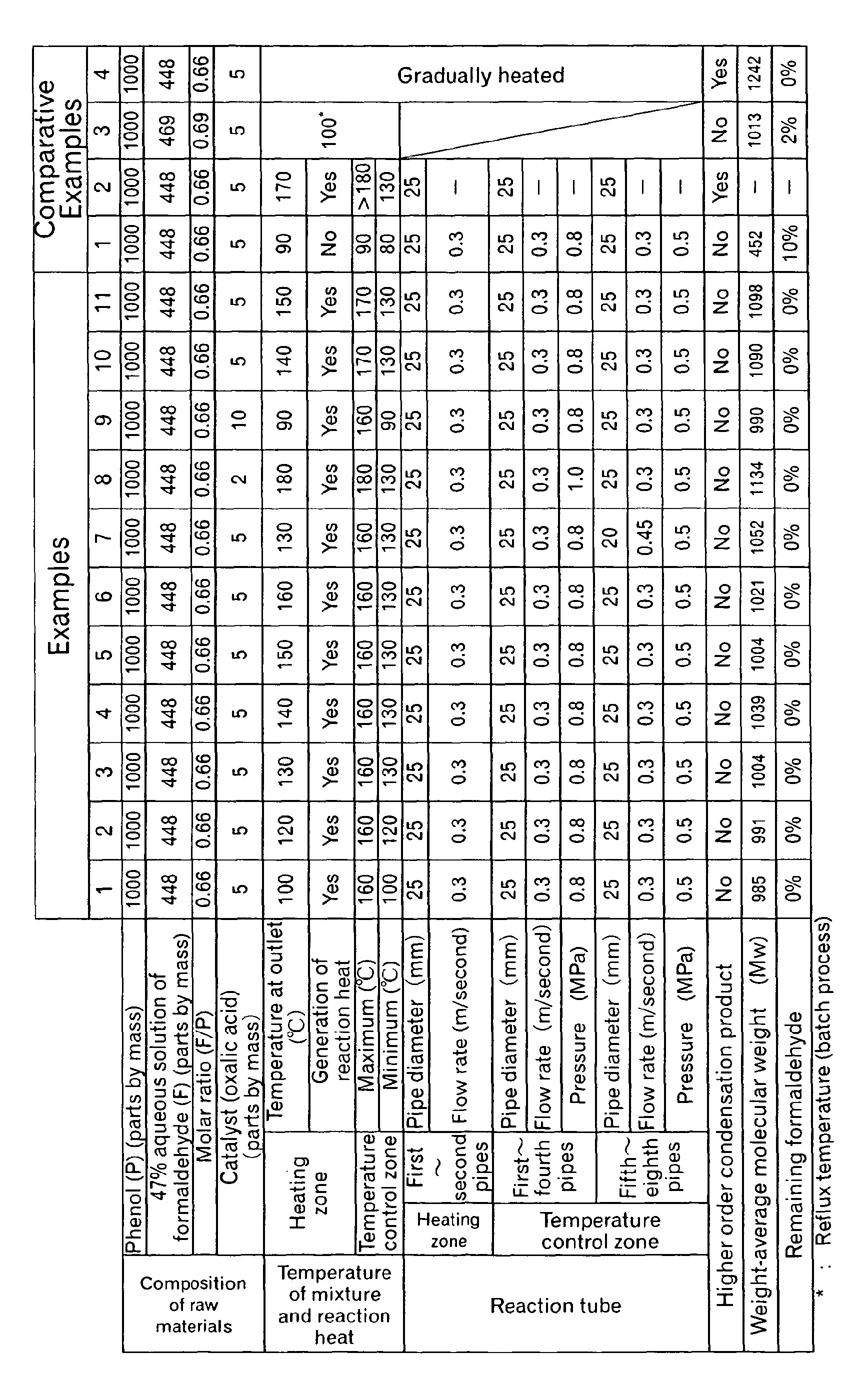

As is apparent from the results of TABLE 1, in Examples 1~11, in which the mixture was heated in the heating zone under the pressure not lower than the vapor pressure of water to a temperature which was not less than a temperature, at which the reaction heat was generated, and then the addition condensation reaction was progressed at the temperature control zone only by the cooling operation, no higher order condensation product was generated, and there was no residual formaldehyde. Therefore, there is recognized that an entire amount of the formaldehyde which was used as one of the raw materials was effectively reacted. In addition, in terms of the weight average molecular weight, intended values of molecular weights were obtained in Examples 1~11, and a high quality of the phenolic novolak resin was produced in a short period of time.

On the other hand, in Comparative Example 1, there was not generated the reaction heat at the heating zone, so that the reaction was not sufficiently progressed. Accordingly, the formaldehyde remained in the reaction product which was obtained after the reaction, and a value of the weight average molecular weight is also low. Meanwhile, in Comparative Example 2, the liquid temperature of the mixture was excessively increased at the heating zone, so that an extraordinary heat generation was caused. Accordingly, there was not able to continue the reaction, for the sake of the safety.

In Comparative Example 3, there was adopted the batch process and an open system. Accordingly, there was not able to pressurize within the reaction system, and the reaction was conducted at 100°C. For this reason, although there was able to produce the phenolic novolak resin which had the intended weight average molecular weight, there remained unreacted formaldehyde, and the production time was longer than that of the continuous process.

In addition, in Comparative Example 4, in which the heating operation was gradually conducted at overall the reaction tube without conducting the cooling operation, there were generated the higher order condensation products on the internal surface of the reaction tube.

### <Example 12>

In order to determine an effect of a static mixer positioned within the reaction tube (12), there was conducted an experiment as described below. Namely, in Experiment 1, there was used, as the reaction tube (12), a reaction tube, in which a static mixer including six elements (a spiral mixer available from TAH Industries, Inc., U.S.A.) was positioned at an inlet of each of the pipes (12c~12j) which constitutes the temperature control zone (32). Meanwhile, in Experiment 2, there was used a reaction tube at which no static mixer was positioned.

Similar to the above Example 1, the phenol, the 47% aqueous solution of formaldehyde, and the oxalic acid were introduced in the raw material-storage tank (14), so as to fulfill the ratio as shown in TABLE 2 below, and were sufficiently stirred within the raw material-storage tank (14), so as to obtain an uniform mixture. Afterwards, the pump (22) was operated and the mixture within the raw material-storage tank (14) was supplied to the inside the reaction tube (12) at a low flow rate (0.1m/second). Then, the mixture was heated at the heating zone (26) located at the upstream side of the reaction tube (12) in the direction of the flow of the mixture, so that the temperature of the mixture became 130°C. Thereafter, the mixture delivered from the heating zone (26) was suitably cooled at the temperature control zone (32), and was reacted while its temperature was kept in a range of 130°C~160°C. Then the mixture was accommodated in the reaction product-storage tank (18). In this operation, the pressure within the reaction tube (12) was kept to be not lower than the vapor pressure of water by using the pressure-regulating valve (24).

The phenolic novolak resin was continuously produced by using the continuous reactor as described above for one hour or six hours. Thereafter, there were observed generation of the higher order condensation products, the weight average molecular weight, and the amount of the remaining aldehydes, similar to the above Example 1. Thus obtained results are shown in TABLE 2 below.

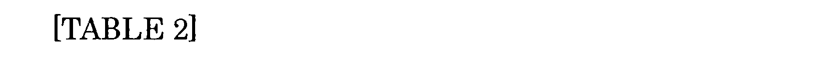

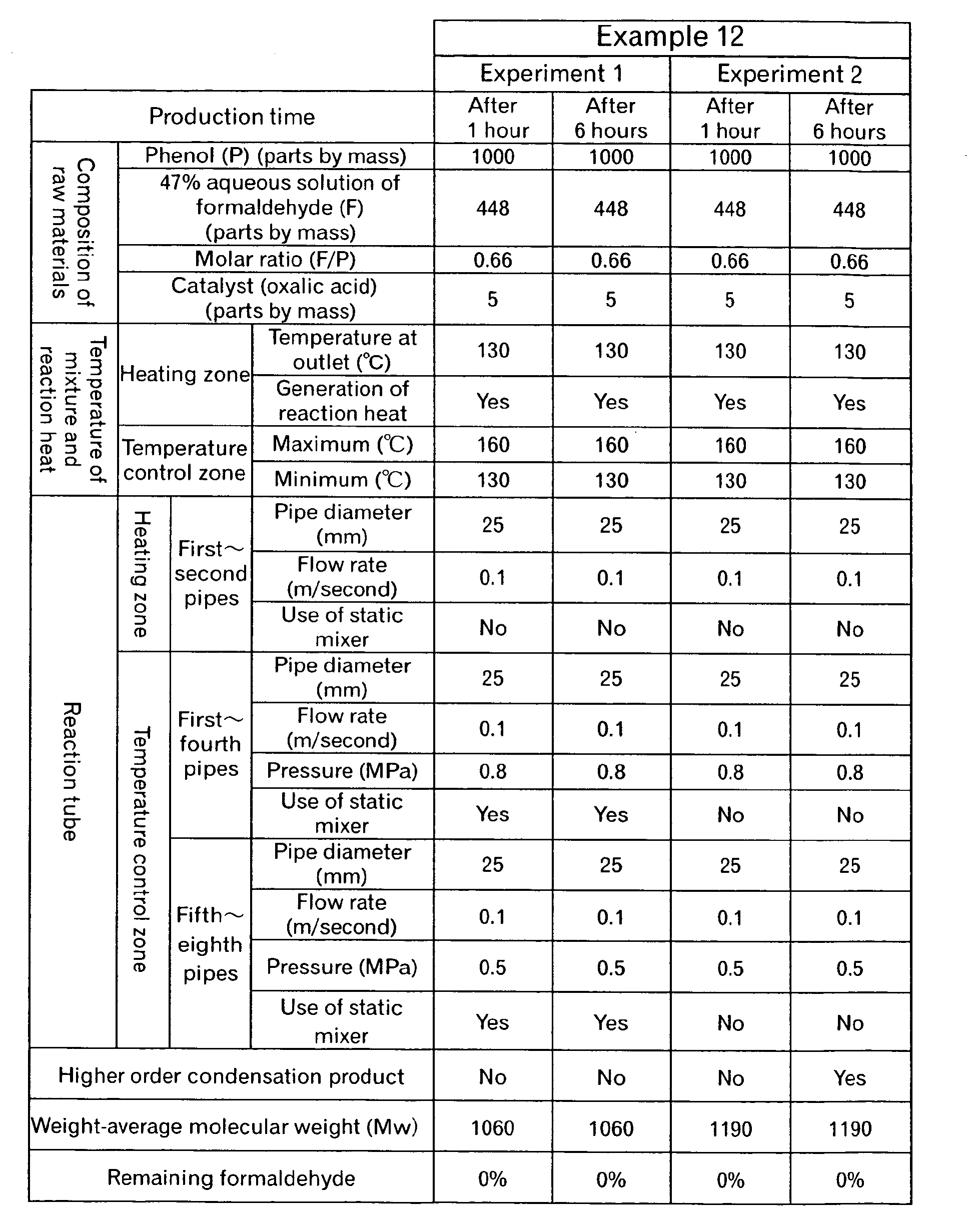

As is apparent from the results of TABLE 2, if the flow rate is as low as 0.1m/second, there is a higher tendency of the generation of the higher order condensation products, as the period of time for the production is longer (see Experiment 2). In this case, there is recognized that if the static mixer is used, the performance for stirring the mixture in the reaction tube, whereby the generation of the scale (the higher order condensation products) can be advantageously prevented.

## Claims

1. A process for continuously producing a phenolic novolak resin by reacting at least one of phenols with at least one of aldehydes in the presence of an acidic catalyst, by using a continuous reactor which has a long reaction tube,
**characterized by** comprising the steps of
providing said reaction tube of the continuous reactor with a heating zone and a temperature control zone in a longitudinal direction of the reaction tube;
continuously supplying a mixture, which includes the at least one of phenols, the at least one of aldehydes, and the acidic catalyst, into the reaction tube of the continuous reactor, while a pressure in the reaction tube is kept to be not lower than a vapor pressure of water;
heating the mixture at the heating zone, which is located on an upstream side of the reaction tube in a direction of a flow of the mixture, to a temperature which is not less than a temperature, at which a reaction heat is generated, for thereby initiating an addition condensation reaction between the at least one of phenols and the at least one of aldehydes in the mixture; and
introducing the mixture, whose temperature is increased by the heating operation and the reaction heat of the addition condensation reaction, to the temperature control zone, which is located on a downstream side of the reaction tube in the direction of the flow of the mixture, and progressing the addition condensation reaction while only the cooling operation of the mixture is conducted.

2. The process for producing a phenolic novolak resin according to claim 1,
**characterized in that** a pipe diameter of at least a portion of the reaction tube, which is located on a downstream side of the temperature control zone with respect to the direction of the flow of the mixture, is made smaller than a pipe diameter of a portion of the reaction tube which is located on the heating zone, so as to enhance a flow rate of the mixture located within the portion of the reaction tube of which the pipe diameter is made smaller.

3. The process for producing a phenolic novolak resin according to claim 1 or 2,
**characterized in that** a static mixer is positioned inside the reaction tube, so that the mixture being flowed in the reaction tube is stirred in the reaction tube.

4. The process for producing a phenolic novolak resin according to any one of claims 1 - 3,
**characterized in that** the flow rate of the mixture flowing inside the reaction tube is not less than 0.3m/second.

5. The process for producing a phenolic novolak resin according to any one of claims 1 - 4,
wherein a length of the heating zone is shorter than a length of the temperature control zone.

6. The process for producing a phenolic novolak resin according to any one of claims 1 - 5,
wherein the mixture is heated at the heating zone to a temperature of 80~180°C.

7. The process for producing a phenolic novolak resin according to any one of claims 1 - 6,
wherein said operation of cooling is conducted at the temperature control zone, so that the temperature of the mixture becomes 90~180°C.

8. The process for producing a phenolic novolak resin according to any one of claims 1 - 7,
wherein said at least one of aldehydes are used in an amount of 0.1~1.0 mol per 1 mol of said at least one of phenols.

9. The process for producing a phenolic novolak resin according to any one of claims 1 - 8,
wherein said acidic catalyst is used within a ratio of 0.5~ 50 parts by mass per 1000 parts by mass of said at least one of phenols.

10. The process for producing a phenolic novolak resin according to any one of claims 1 - 9,
wherein the reaction tube has an internal diameter of 10~ 200mm and a length of 10~2000m.

11. The process for producing a phenolic novolak resin according to any one of claims 1 - 10,
wherein the reaction tube has a structure of a duplex tube comprising an external tube and an internal tube which is coaxially located within the external tube, and
wherein said heating or cooling operation is conducted by flowing a heating steam or a cooling water in a space between the external and internal tubes.
